# FASCICULE DE BREVET EUROPEEN

(11) **EP 0 707 396 B1**
(45) Date de publication et mention de la délivrance du brevet: **28.02.2001**
(21) Numéro de dépôt: 95460034.2
(22) Date de dépôt: 13.09.1995
(51) Int. Cl.: H04L 12/44, G06F 13/40, H04L 25/24

(54) **Repéteur de bus**
Buszwischenverstärker
Bus repeater

(30) Priorité: 23.09.1994 FR 9411621
(43) Date de publication de la demande: 17.04.1996
(73) Titulaire: DELTA DORE Société Anonyme, F-35270 Combourg (FR)
(72) Inventeur: Letutour, Jean, F-35630 Hede (FR)
(74) Mandataire: Maillet, Alain

(56) Documents cités:
- US-A- 3 832 489
- US-A- 5 202 593
- EUROPEAN CONFERENCE ON ELECTROTECHNICS, FRANCE, pages 425-430, L. VIDALLER ET AL. 'Réseau local à fibre optique à évitement de collisions'

## Description

L'invention concerne un système de transmission de signaux d'un bus du type à pincement, tel que le bus nommé Batibus ^{(R)} vers un ou plusieurs autres bus du même type connectés entre eux, et réciproquement.

Un bus est un ensemble d'éléments physiques interconnectés qui fonctionnent au même débit binaire, et au sein duquel à tout moment existe au plus une source d'informations distincte. Ces informations sont diffusées à toute station d'une ligne connectée à ce bus.

L'invention s'applique à des bus du type à pincement qui sont des réseaux pour la gestion technique et administrative des bâtiments répondant à la normalisation française C46-621.

Le but de la présente invention est de diffuser l'information émise par une source d'un bus, à toutes les stations de ce bus et à toutes les stations des autres bus connectés à ce premier bus.

A cet effet, on utilise un répéteur destiné à relier ensemble n bus du type à pincement de manière qu'une information émise sur l'un desdits bus puisse être transmise à l'ensemble desdits bus.

Selon une caractéristique de l'invention, ledit répéteur est constitué, d'une part, de n modules affectés chacun à un bus, chaque module comportant un interrupteur commandé en fermeture par application d'une tension positive, les deux contacts dudit interrupteur étant respectivement reliés aux deux fils du bus correspondant, une entrée de commande reliée à l'électrode de commande dudit interrupteur commandé, une porte du type NON-OU dont la sortie constitue la sortie dudit module, dont une première entrée est reliée au fil positif dudit bus et dont une seconde entrée est reliée à l'électrode de commande dudit interrupteur, et, d'autre part, de n portes de type OU, chaque porte comprenant une sortie reliée à l'entrée de commande d'un module et n-1 entrées respectivement reliées aux sorties des n-1 autres modules.

Selon un autre mode de l'invention, ledit répéteur est constitué de deux modules affectés chacun à un bus, chaque module comportant un interrupteur commandé en fermeture par application d'une tension positive, les deux contacts dudit interrupteur étant respectivement reliés aux deux fils du bus correspondant, une entrée de commande reliée à l'électrode de commande dudit interrupteur commandé, une porte du type NON-OU dont la sortie constitue la sortie dudit module, dont une première entrée est reliée au fil positif dudit bus et dont une seconde entrée est reliée à l'électrode de commande dudit interrupteur, l'entrée de commande d'un module étant reliée à la sortie dudit autre module.

Selon une autre caractéristique de l'invention, l'entrée de la porte NON-OU d'un module est reliée au fil positif dudit bus correspondant par l'intermédiaire d'un comparateur dont l'entrée négative est reliée audit fil positif et dont l'entrée positive est à un potentiel de référence.

Selon une autre caractéristique de l'invention, ladite porte NON-OU d'un module est constituée d'un comparateur et d'un circuit logique, l'entrée négative dudit comparateur constituant l'entrée de la porte NON-OU qui est reliée au fil positif dudit bus correspondant audit module et l'entrée positive étant à un potentiel de référence, la sortie dudit comparateur étant reliée à une première entrée dudit circuit logique dont la seconde entrée constitue la seconde entrée de ladite porte NON-OU, la sortie dudit circuit logique constituant la sortie de ladite porte NON-OU, la table de vérité dudit circuit logique étant la suivante:

| e1 | e2 | S |
|---|---|---|
| 0 | 0 | **0** |
| 0 | 1 | **0** |
| 1 | 0 | **1** |
| 1 | 1 | **0** |

Selon une autre caractéristique de l'invention, l'entrée de commande de chaque module est reliée à l'électrode de commande dudit interrupteur commandé par l'intermédiaire d'un monostable.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma représentant un répéteur constitué de n modules et de n portes OU et connecté à n bus du type à pincement,
la Fig. 2a représente un module de répéteur selon un premier mode de réalisation,
la Fig. 2b représente un module de répéteur selon un second mode de réalisation,
la Fig. 3a représente un circuit logique selon un premier mode de réalisation,
la Fig. 3b représente un circuit logique selon un second mode de réalisation,
la Fig. 4 représente un répéteur selon l'invention constitué de deux modules, et
la Fig. 5 représente les états logiques en différents points d'un répéteur à deux modules et dans trois cas.

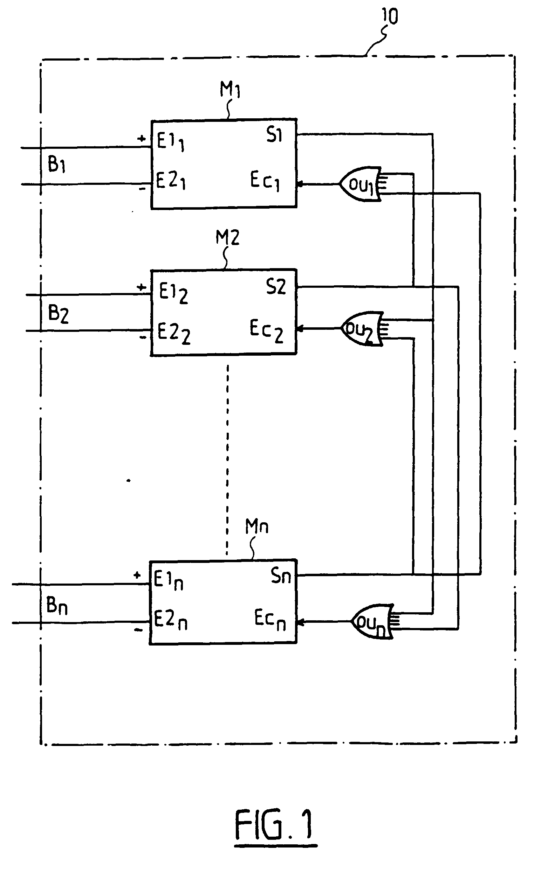

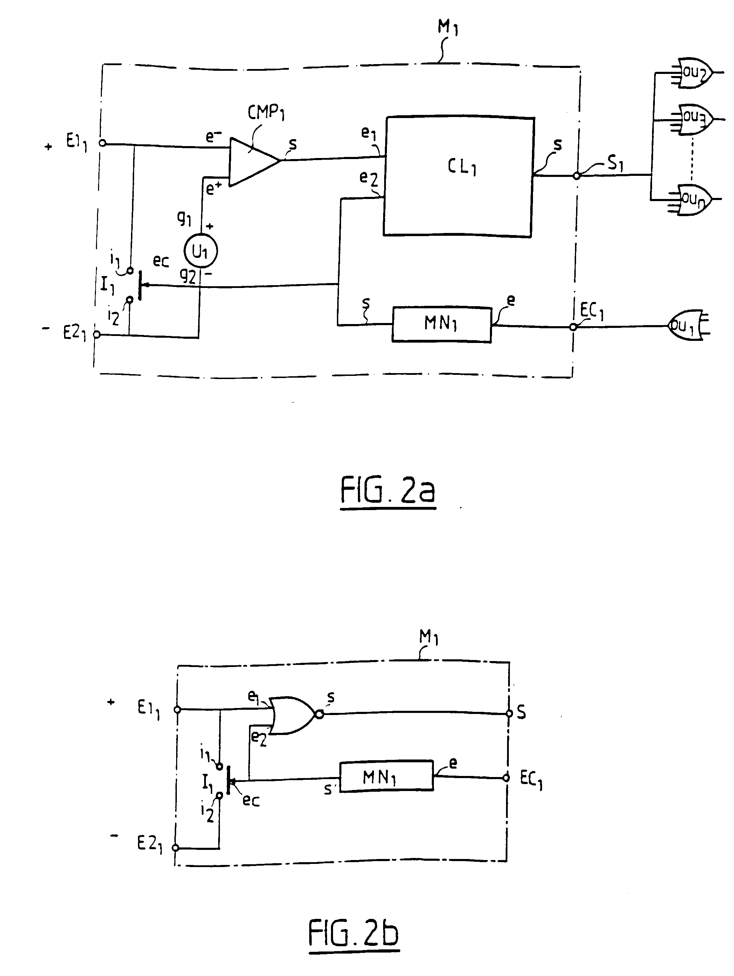

Le répéteur 10 représenté à la Fig. 1 est connecté à n bus Bᵢ (i=1 à n). Il est constitué de n modules répéteurs Mᵢ identiques. Chaque module Mᵢ a deux entrées E1ᵢ et E2ᵢ respectivement reliées aux deux fils positif et négatif du bus Bᵢ correspondant, une entrée de commande Ecᵢ reliée à la sortie d'une porte OUᵢ à n-1 entrées et une sortie Sᵢ. Chacune des entrées d'une porte OUᵢ dont la sortie est reliée au module Mᵢ, est reliée à la sortie Sⱼ d'un autre module Mⱼ (j=1 à i-1, i=1 à n). Tous les modules Mⱼ étant constitués des mêmes éléments, on va décrire uniquement le module M₁ dont un premier mode a été représenté à la Fig. 2a.

Le module M₁ comprend essentiellement un comparateur CMP₁ pourvu de deux entrées e⁺ et e⁻ et d'une sortie s, un circuit logique CL₁ pourvu de deux entrées e1 et e2 et d'une sortie S, un interrupteur commandé I₁ pourvu de deux contacts i₁ et i₂ et d'une électrode de commande ec, un générateur de tension de référence U₁ de bornes positive g₁ et négative g₂ et un monostable MN₁ pourvu d'une entrée e et d'une sortie s.

Selon la norme C46-621, la tension sur un bus pincé est inférieure à 8 volts et la tension sur un bus non pincé est supérieure à 8 volts. C'est pourquoi le générateur de tension de référence U₁ délivre sensiblement une tension de 8 volts. Le comparateur CMP₁ compare alors la tension sur le bus B₁ avec la tension de référence, ce qui permet d'établir avec précision les changements de niveau de la sortie du comparateur CMP₁.

L'entrée E1₁ du module M₁ est reliée à l'entrée négative e⁻ du comparateur CMP₁ et au contact i₁ de l'interrupteur I₁. L'autre entrée E2₁ du module M₁ est reliée au contact i₂ de l'interrupteur I₁ et à la borne g₂ du générateur de tension U₁. La borne g₁ du générateur de tension U₁ est reliée à l'entrée positive e⁺ du comparateur CMP₁. La sortie s du comparateur CMP₁ est reliée à l'entrée e1 du circuit logique CL₁. L'entrée e du monostable MN₁ est reliée à l'entrée de commande Ec₁ du module M₁ et sa sortie s est reliée, d'une part, à l'électrode de commande ec de l'interrupteur I₁ et, d'autre part, à l'entrée e2 du circuit logique CL₁. La sortie S du circuit logique CL₁ constitue la sortie S₁ du module M₁.

Le circuit logique CL₁ doit avoir la table de vérité suivante:

| e1 | e2 | S |
|---|---|---|
| 0 | 0 | **0** |
| 0 | 1 | **0** |
| 1 | 0 | **1** |
| 1 | 1 | **0** |

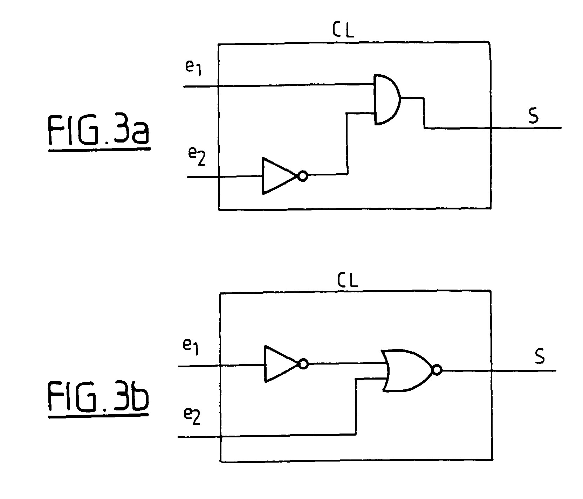

A cet effet, on peut par exemple prévoir une porte ET associée à une porte NON comme cela a été représenté à la Fig. 3a. L'entrée e1 du circuit CL₁ est reliée à une entrée de la porte ET, l'entrée e2 du circuit CL₁ est reliée à l'entrée de la porte NON dont la sortie est reliée à la seconde entrée de la porte ET. Enfin, la sortie de la porte ET est reliée à la sortie S du circuit logique CL₁.

On peut également prévoir une porte NON-OU associée à une porte NON comme cela a été représenté à la Fig. 3b. L'entrée el du circuit CL₁ est alors reliée à l'entrée de la porte NON dont la sortie est reliée à une entrée de la porte NON OU. L'entrée e2 du circuit CL₁ est reliée à la deuxième entrée de la porte NON OU. Enfin, la sortie de la porte NON OU est reliée à la sortie S du circuit logique CL₁.

On peut aussi prévoir tout autre moyen équivalent pour obtenir une table de vérité telle que précédemment représentée.

Un autre exemple de réalisation des modules répéteurs Mᵢ est proposé à la Fig. 2b. Dans ce cas le module Mᵢ est aussi pourvu de deux entrées E1₁ et E2₁, d'une entrée de commande Ec₁ et d'une sortie S₁. Ledit module M₁ est constitué de l'interrupteur I₁ et du monostable MN₁ décrits précédemment et d'une porte NON-OU₁ pourvue de deux entrées e₁ et e₂ et d'une sortie s. L'entrée E1₁ du module M₁ est reliée à l'entrée e1 de la porte NON-OU₁ et au contact i₁ de l'interrupteur I₁. L'entrée E2₁ du module M₁ est reliée au contact i₂ de l'interrupteur I₁. L'entrée de commande Ec₁ est reliée à l'entrée e du monostable MN₁ dont la sortie s est reliée, d'une part, à l'électrode de commande ec de l'interrupteur I₁ et, d'autre part, à l'entrée e₂ de la porte NON-OU₁. La sortie s de la porte NON-OU₁ constitue la sortie S₁ du module M₁.

Ce second exemple présente l'avantage d'être plus simple que le premier dans sa structure. Cependant, le premier mode de réalisation décrit s'adapte mieux aux bus du type à pincement car le comparateur de tension CMP, qui compare la tension sur le bus et la tension du générateur de tension de référence U₁, permet d'établir avec précision le niveau à sa sortie suivant que le bus est pincé ou non.

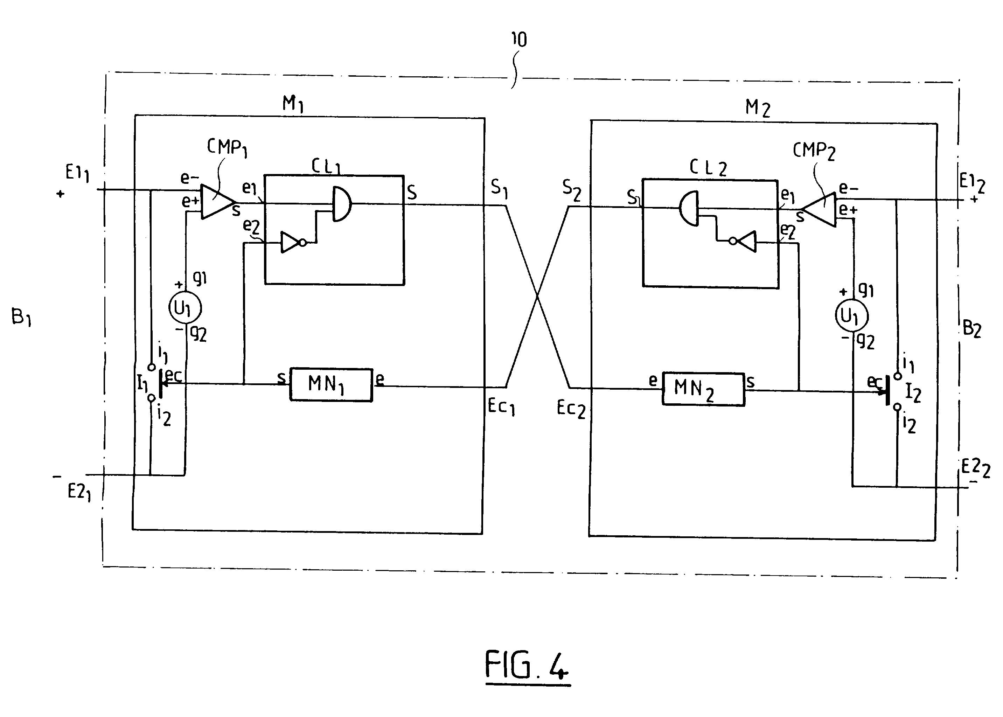

La Fig. 4 représente un répéteur 10 prévu pour deux bus B₁ et B₂ et constitué de deux modules M₁ et M₂. Lesdits modules M₁ et M₂ sont identiques à ceux décrits précédemment. On les a représentés dans le premier mode de réalisation. La différence avec un répéteur constitué de n modules Mᵢ (au moins trois), est que la sortie S₁ du module M₁ est directement reliée à l'entrée Ec₂ du module M₂ et que l'entrée de commande Ec₁ du module M₁ est directement reliée à la sortie S₂ du module M₂. Les portes OUᵢ ne sont donc pas nécessaires.

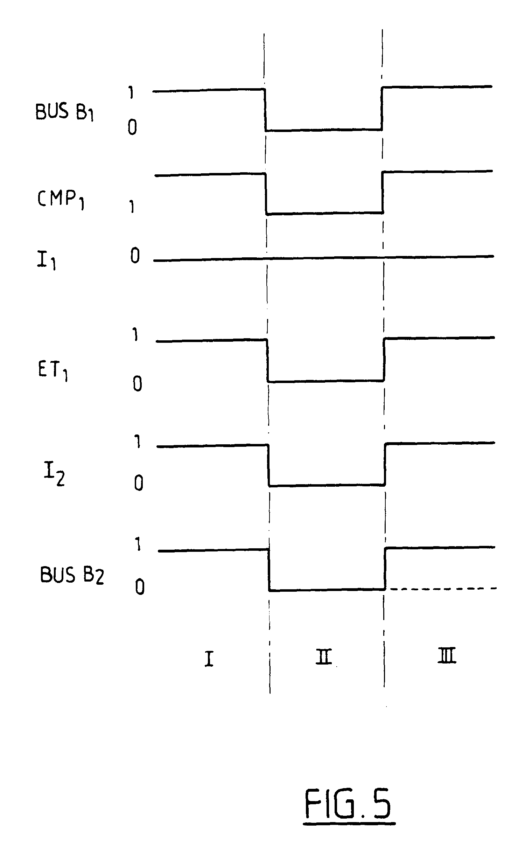

On va à présent décrire le fonctionnement du répéteur, à l'aide des Figs. 4 et 5, pour deux bus, en prenant le cas où le circuit logique CL est constitué d'une porte ET associée à une porte NON (voir Fig. 3a).

La Fig. 5 représente les états en différents points des modules M₁ et M₂ dans trois cas (I, II, III).

On notera préalablement qu'un comparateur CMPᵢ (i=1, 2) délivre un niveau un si une station du bus Bᵢ correspondant pince la ligne du bus Bᵢ ou si l'interrupteur Iᵢ du module Mᵢ correspondant est fermé.

Si une station du bus B₁ pince la ligne (cas I), la tension sur le bus B₁ a une valeur nulle et le bus B₁ émet un niveau un. Le comparateur CMP₁, qui compare la tension du bus B₁ avec celle du générateur U₁, délivre alors un niveau un. Si on considère que l'interrupteur I₁ est ouvert, ledit interrupteur I₁ est au niveau zéro. La porte NON délivre alors un niveau un. Les deux entrées de la porte ET₁ étant au niveau un, ladite porte ET₁ délivre donc un niveau un. Ce niveau un est transmis à l'électrode de commande ec de l'interrupteur I₂ qui se ferme et qui par conséquent pince la ligne du bus B₂. Ainsi, un niveau un est émis sur le bus B₂. On a donc bien les mêmes niveaux sur les deux bus B₁ et B₂.

Le comparateur CMP₂ délivre alors un niveau zéro et la porte ET₂ également puisqu'elle a une entrée au niveau un et l'autre au niveau zéro. L'interrupteur I₁ reste donc ouvert.

Le répéteur est réalisé d'une façon telle qu'un signal émis par le bus B₁ et transmis au bus B₂ ne soit pas retransmis au bus B₁ par le bus B₂. Cela risquerait de bloquer le fonctionnement du répéteur.

Si la station du bus B₁ relâche la ligne (cas II), la tension sur le bus B₁ est supérieure à 8 volts et le bus B₁ est au niveau zéro. Si on considère que l'interrupteur I₁ est toujours ouvert, son électrode de commande ec étant donc au niveau zéro, le comparateur CMP₁ délivre un niveau zéro et la porte NON₁ délivre un niveau un. La porte ET₁ délivre quant à elle un niveau zéro, d'où l'ouverture de l'interrupteur I₂ et le relâchement du bus B₂.

Dans le cas III, une station du bus B₁ émet un niveau un et pince la ligne du bus B₁ alors qu'une station du bus B₂ émet un niveau zéro et relâche la ligne du bus B₂. Comme précédemment dans le cas I, le bus B₂ est pincé par l'interrupteur I₂ et un niveau un est donc transmis au bus B₂. Il y a alors collision. La station du bus B₂ répondant à la norme C46-621 va alors stopper son émission pour laisser la station du bus B₁ émettre seule. Dès que la ligne est à nouveau libre, la station du bus B₂ pourra émettre.

Si, suite à une panne, le bus B₁ par exemple, est en court-circuit de manière prolongée, le niveau un sur le bus B₁ transmis à l'interrupteur I₂ (voir cas I) est toujours le même, ce qui normalement devrait mettre également le bus B₂ en court-circuit. Cependant, le monostable MN₁ prévu entre la porte ET₁ et l'interrupteur I₂ limite le temps de fermeture de l'interrupteur I₂. Ainsi, a partir d'un certain temps de fermeture, la sortie s du monostable MN₁ passe au niveau zéro commandant l'ouverture de l'interrupteur I₂. Bien que le bus B₁ soit en court-circuit, et donc hors service, le bus B₂ est libéré pour un fonctionnement normal, limité à des transmissions sur ce bus B₂.

Pour tous les cas mentionnés ci-dessus, compte tenu de la symétrie du circuit, on comprendra que la transmission du bus B₂ vers le bus B₁ est effectuée de manière semblable à celle du bus B₁ vers le bus B₂.

Si maintenant on considère n modules Mᵢ (i=1 à n), le fonctionnement est identique.

Par exemple, les niveaux délivrés sur les sorties Sᵢ (i=2 à n), par les circuits logiques CLᵢ, sont transmis aux n-1 entrées de la porte OU₁ (Figs. 1 et 2). Si une station d'un bus Bᵢ (i=2 a n) pince par exemple ledit bus Bᵢ, un niveau un est délivré par le comparateur CMPᵢ, et est transmis à la sortie S du circuit logique CLᵢ, à l'entrée correspondante de la porte OU₁ et à la sortie de cette porte. L'interrupteur I₁ reçoit ce niveau un et pince la ligne. Le niveau un sur le bus Bᵢ est transmis au bus B₁, et comme on le comprendra facilement, aux autres bus également.

## Revendications

1. Répéteur destiné à relier ensemble n bus du type à pincement de manière qu'une information émise sur l'un desdits bus puisse être transmise à l'ensemble desdits bus, caractérisé en ce qu'il est constitué, d'une part, de n modules (Mᵢ, i=1 à n) affectés chacun à un bus (Bᵢ), chaque module (Mᵢ) comportant un interrupteur (Iᵢ) commandé en fermeture par application d'une tension positive, les deux contacts (i₁, i₂) dudit interrupteur (Iᵢ) étant respectivement reliés aux deux fils du bus (Bᵢ) correspondant, une entrée de commande (Ecᵢ) reliée à l'électrode de commande (ec) dudit interrupteur commandé (Iᵢ), une porte du type NON-OU dont la sortie (s) constitue la sortie (Sᵢ) dudit module (Mᵢ), dont une première entrée (e₁) est reliée au fil positif dudit bus (Bᵢ) et dont une seconde entrée (e₂) est reliée à l'électrode de commande (ec) dudit interrupteur (Iᵢ), et, d'autre part, de n portes de type OU, chaque porte comprenant une sortie reliée à l'entrée de commande (Ecᵢ) d'un module (Mᵢ) et n-1 entrées respectivement reliées aux sorties des n-1 autres modules (Mᵢ).

2. Répéteur destiné à relier ensemble deux bus (B₁ et B₂) du type à pincement de manière qu'une information émise sur l'un desdits bus (B₁ ou B₂) puisse être transmise à l'autre bus (respectivement B₂ ou B₁), caractérisé en ce qu'il est constitué de 2 modules (M₁, M₂) affectés chacun à un bus (B₁, B₂), chaque module (M₁, M₂) comportant un interrupteur (I₁, I₂) commandé en fermeture par application d'une tension positive, les deux contacts (i₁ et i₂) dudit interrupteur (I₁, I₂) étant respectivement reliés aux deux fils du bus (B₁, B₂) correspondant, une entrée de commande (Ec₁, Ec₂) reliée à l'électrode de commande (ec) dudit interrupteur commandé (I₁, I₂), une porte du type NON-OU dont la sortie constitue la sortie (S₁, S₂) dudit module (M₁, M₂), dont une première entrée (E1₁, E1₂) est reliée au fil positif dudit bus (B₁, B₂) et dont une seconde entrée (E2₁, E2₂) est reliée à l'électrode de commande (ec) dudit interrupteur (I₁, I₂), l'entrée de commande (Ec₁, Ec₂) d'un module (M₁, M₂) étant reliée à la sortie (S₂ ou S₁) dudit autre module (M₂ ou M₁).

3. Répéteur selon la revendication 1 ou 2, caractérisé en ce que l'entrée (e₁) de la porte NON-OU d'un module (Mᵢ) est reliée au fil positif dudit bus (Bᵢ) correspondant par l'intermédiaire d'un comparateur (CMPᵢ) dont l'entrée négative (e⁻) est reliée audit fil positif et dont l'entrée positive (e⁺) est à un potentiel de référence (U₁).

4. Répéteur selon la revendication 1 ou 2, caractérisé en ce que ladite porte NON-OU d'un module (Mᵢ) est constituée d'un comparateur (CMPᵢ) et d'un circuit logique (CLᵢ), l'entrée négative (e⁻) dudit comparateur (CMPᵢ) constituant l'entrée (e₁) de la porte NON-OU qui est reliée au fil positif dudit bus (Bᵢ) correspondant audit module (Mᵢ) et l'entrée positive (e⁺) étant a un potentiel de référence, la sortie (s) dudit comparateur (CMPᵢ) étant reliée à une première entrée (e₁) dudit circuit logique (CLᵢ) dont la seconde entrée (e₂) constitue la seconde entrée de ladite porte NON-OU, la sortie (S) dudit circuit logique (CLᵢ) constituant la sortie de ladite porte NON-OU, la table de vérité dudit circuit logique (CLᵢ) étant la suivante:
| e1 | e2 | S |
|---|---|---|
| 0 | 0 | **0** |
| 0 | 1 | **0** |
| 1 | 0 | **1** |
| 1 | 1 | **0** |

5. Répéteur selon une des revendications précédentes, caractérisé en ce que l'entrée de commande (Ecᵢ) de chaque module (Mᵢ) est reliée à l'électrode de commande (ec) dudit interrupteur commandé (Iᵢ) par l'intermédiaire d'un monostable (MNᵢ).

## Claims

1. Repeater intended to connect n pinch-off buses so that data transmitted to one of said buses can be transmitted to all of said buses, characterised by the fact that it is firstly made up of n modules (Mᵢ, i=1 to n), each of which is allocated to a bus (Bᵢ), each module (Mᵢ) comprising a switch (Iᵢ) closed by the application of a positive voltage, the two contacts (iᵢ, i₂) of said switch (Iᵢ) being connected respectively to two wires of the corresponding bus (Bᵢ), a control input (ECᵢ) connected to the control electrode (ec) of the said controlled switch (Lᵢ), a NOR gate of which the output (s) constitutes the output (Sᵢ) of the said module (Mᵢ), of which an initial input (e₁) is connected to the positive wire of said bus (Bᵢ) and of which a second input (e₂) is connected to the control electrode (ec) of said switch (Iᵢ) and, secondly, n OR gates, each gate comprising an output connected to the control input (Ecᵢ) of a module (M;) and n-1 inputs respectively connected to n-1 other modules (Mᵢ).

2. Repeater intended to connect two pinch-off buses (B₁ and B₂) together so that data transmitted to one of said buses (B₁ or B₂) can be transmitted to the other bus (B₂ or B₁ respectively), characterised by the fact that it is made up of two modules (M₁, M₂), each of which is allocated to a bus (B₁, B₂), each module (M₁, M₂) comprising a switch (I₁,I₂) closed by the application of a positive voltage, the two contacts (iᵢ, i₂) of said switch (I₁, I₂) being connected respectively to two wires of the corresponding bus (B₁, B₂), a control input (Ec₁, Ec₂) connected to the control electrode (ec) of the said controlled switch (I₁, I₂), a NOR gate of which the output constitutes the output (S₁, S₂) of the said module (M_{1,} M₂), of which an initial input (E1_{1,} E1₂) is connected to the positive wire of said bus (B₁, B₂) and of which a second input (E2_{1,} E2₂) is connected to the control electrode (ec) of said switch (I₁, I₂), the control input (Ec₁, Ec₂) of a module (M_{1,} M₂) being connected to the output (S₂ or S₁) of said other module M₂ or M₁.

3. Repeater in accordance with claim 1 or 2, characterised by the fact that the input (e₁) of the NOR gate of a module (Mᵢ) is connected to the positive wire of said corresponding bus (Bᵢ) through a comparator (CMPᵢ), of which the negative input (e⁻) is connected to said positive wire and of which the positive input (e⁺) has a reference voltage (U₁).

4. Repeater in accordance with claim 1 or 2, characterised by the fact that said NOR gate of a module (Mᵢ) comprises a comparator (CMPᵢ) and a logic circuit (CLᵢ) the negative input (e⁻) of said comparator (CMPᵢ) comprising the input (e₁) of the NOR gate which is connected to the positive wire of said bus (Bᵢ) corresponding to said module (Mᵢ) and the positive input (e⁺) having a reference voltage, the output (s) of said comparator (CMPᵢ) being connected to an initial input (e₁) of said logic circuit (CLᵢ) of which the second input (e₂) comprises the second input of said NOR gate, the output (S) of said logic circuit (CLᵢ) comprising the output of said NOR gate, the truth table of said logic circuit (CLᵢ) being as follows:
| e1 | e2 | S |
|---|---|---|
| 0 | 0 | **0** |
| 0 | 1 | **0** |
| 1 | 0 | **1** |
| 1 | 1 | **0** |

5. Repeater in accordance with one of the preceding claims, characterised by the fact that the control input (Ecᵢ) of each module (Mᵢ) is connected to the control electrode (ec) of said controlled switch (Iᵢ) through a monostable [relay] (MNᵢ).

## Patentansprüche

1. Verarbeitungsschaltung zum Verbinden von n Bussen des Klemm-Typs, so daß eine an einen dieser Busse ausgesandte Information auf die Gesamtheit der Busse übertragen werden kann, dadurch gekennzeichnet, daß er einerseits aus n Modulen (Mᵢ, i=1 bis n) besteht, die jeweils einem Bus (Bᵢ) zugeordnet sind, wobei jeder Modul (Mᵢ) einen Schalter (Iᵢ) besitzt, der zum Schließen des Stromkreises durch Anlegen einer positiven Spannung gesteuert wird, wobei die beiden Kontakte (i₁, i₂) des Schalters (Iᵢ) jeweils mit zwei Leitungen des entsprechenden Busses (Bᵢ) verbunden sind, einen mit der Steuerelektrode (ec) des gesteuerten Schalters (Iᵢ) verbundenen Steuereingang (Ecᵢ), ein NOR-Gatter, dessen Ausgang (S) den Ausgang (Sᵢ) des Moduls (Mᵢ) bildet, dessen erster Eingang (e₁) mit der positiven Leitung des Busses (Bᵢ) verbunden ist und dessen zweiter Eingang (e₂) mit der Steuerelektrode (ec) des Schalters (Iᵢ) verbunden ist, und andererseits mit n ODER-Gattern, wobei jedes Gatter einen mit dem Steuereingang (Ecᵢ) eines Moduls (Mᵢ) verbundenen Ausgang besitzt und n-1 Eingänge, die jeweils mit den Ausgängen der n-1 anderen Module (Mᵢ) verbunden sind.

2. Verarbeitungsschaltung zur Verbindung zweier Busse (B₁ und B₂) des Klemm-Typs, so daß eine an einen dieser Busse (B₁ oder B₂) ausgesandte Information auf den anderen Bus (bzw. B₂ oder B₁) übertragen werden kann, dadurch gekennzeichnet, daß er aus zwei Modulen (M₁, M₂) besteht, die jeweils einem Bus (B₁, B₂) zugeordnet sind, wobei jeder Modul (M₁, M₂) einen Schalter (I₁, I₂) besitzt, der zum Schließen des Stromkreises durch Anlegen einer positiven Spannung gesteuert wird, wobei die beiden Kontakte (i₁ und i₂) des Schalters (I₁, I₂) jeweils mit zwei Leitungen des entsprechenden Busses (B₁, B₂) verbunden sind, einem mit der Steuerelektrode (ec) des gesteuerten Schalters (I₁, I₂) verbundenen Steuereingang (Ec₁, Ec₂), einem NOR-Gatter, dessen Ausgang den Ausgang (S₁, S₂) des Moduls (M₁, M₂) bildet, dessen erster Eingang (E1₁, E1₂) mit der positiven Leitung des Busses (B₁, B₂) verbunden ist und dessen zweiter Eingang (E₂₁, E₂₂) mit der Steuerelektrode (ec) des Schalters (I₁, I₂) verbunden ist, wobei der Steuereingang (Ec₁, Ec₂) eines Moduls (M₁, M₂) mit dem Ausgang (S₂ oder S₁) des anderen Moduls (M₂ oder M₁) verbunden ist.

3. Verarbeitungsschaltung nach Anspruch 1 oder 2, dadurch gekennzeichnet, daß der Eingang (e₁) des NOR-Gatters eines Moduls (Mᵢ) mit der positiven Leitung des entsprechenden Busses (Bᵢ) mittels eines Komparators (CMP) verbunden ist, dessen negativer Eingang (e⁻) mit der positiven Leitung verbunden ist, und dessen positiver Eingang (e⁺) sich auf einem Bezugspotential (U₁) befindet.

4. Verarbeitungsschaltung nach Anspruch 1 oder 2, dadurch gekennzeichnet, daß das NOR-Gatter eines Moduls (Mᵢ) aus einem Komparator (CMP) und einer logischen Schaltung (CLᵢ) besteht, wobei der negative Eingang (e⁻) des Komparators (CMP), der den Eingang (e₁) des NOR-Gatters bildet, welches mit der positiven Leitung des Busses (Bᵢ) verbunden ist, der dem Modul (Mᵢ) entspricht, und wobei sich der positive Eingang (e⁺) auf einem Bezugspotential befindet, wobei der Ausgang (s) des Komparators (CMPᵢ) mit einem ersten Eingang (e₁) der logischen Schaltung (CLᵢ) verbunden ist, deren zweiter Eingang (e₂) den zweiten Eingang des NOR-Gatters bildet, wobei der Ausgang (S) der logischen Schaltung (CLᵢ) den Ausgang des NOR-Gatters bildet, wobei die Echtheits-Tabelle der logischen Schaltung (CLᵢ) die folgende ist:
| e1 | e2 | S |
|---|---|---|
| 0 | 0 | 0 |
| 0 | 1 | 0 |
| 1 | 0 | 1 |
| 1 | 1 | 0 |

5. Verarbeitungsschaltung nach einem der vorhergehenden Ansprüche, dadurch gekennzeichnet, daß der Steuereingang (Ecᵢ) jedes Moduls (Mᵢ) mit der Steuerelektrode (ec) des gesteuerten Schalters (Iᵢ) durch Zwischenschaltung einer monostabilen Kippschaltung (Mnᵢ) verbunden ist.
